(19) Europäisches Patentamt / European Patent Office / Office européen des brevets

(11) **EP 3 473 897 A1**

(12) **EUROPEAN PATENT APPLICATION**
published in accordance with Art. 153(4) EPC

(43) Date of publication:
**24.04.2019 Bulletin 2019/17**

(51) Int Cl.:
**F16J 15/34** (2006.01)   **F04D 29/08** (2006.01)

(21) Application number: **16905690.0**

(22) Date of filing: **20.06.2016**

(86) International application number:
**PCT/RU2016/000373**

(87) International publication number:
**WO 2017/222404 (28.12.2017 Gazette 2017/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Joint Stock Company "Central Design Bureau of Machine Building" St.Peterburg 190020 (RU)**
• **Joint Stock Company "Science and Innovations" Moscow 119180 (RU)**

(72) Inventors:
• **AGRINSKIY, Andrey Nikolaevich St.Petersburg 198328 (RU)**

• **VORONOV, Timur Dmitrievich St.Petersburg 197343 (RU)**
• **GORONKOV, Andrey Vladimirovich St.Petersburg 194352 (RU)**
• **KAZANTSEV, Rodion Petrovich St.Petersburg 194356 (RU)**
• **SHCHUTSKIY, Sergey Yurevich St.Petersburg 197227 (RU)**
• **KUZ'MIN, Aleksey Mikhaylovich St.Petersburg 191014 (RU)**

(74) Representative: **Friese Goeden Patentanwälte PartGmbB Widenmayerstraße 49 80538 München (DE)**

(54) **END SEAL**

(57) The invention relates to face seals of the rotors of pump units for separation of media or pressure drop. The invention can be used in the pumps used in nuclear power plants, in particular the main circulation pumps. The invention is aimed at improving the reliability of the assembly, as well as improving the workability of the parts and seal assembly. To obtain the appropriate technical results, a multistage face seal design is proposed, which comprises mounted in series work stages and end stage, each of which includes a rotor element located on the shaft and a spring-assisted axially movable stator element contacting it, sealed relatively to the casing with an O-ring, at the same time the cavities of high and low pressure of work stages are connected in series with restricted openings made in the stator element, which is designed so that to fulfill the functions of an axially movable step-like piston sealed relatively to the casing. The outer diameters of the stator element piston stages are made with the ratio $D_2 = \sqrt{\dfrac{D_1^2 - D_0^2(1-k)}{k}}$, where $D_2$ is the diameter of the larger piston cylinder, $D_1$ is the diameter of the smaller piston cylinder. This ratio ensures that there is no additional force on the stator element in the case of its normal operation, while allowing, in the case of seal opening, to increase the influence on the stator element aimed at seal closing due to the hydrostatic forces acting on the piston.

Fig. 1

EP 3 473 897 A1

## Description

The invention relates to face seals of the rotors of pump units for separation of media or pressure drop.

The invention can be used in the pumps used in nuclear power plants, in particular the main circulation pumps.

A block of face seals is known (RF Patent No. 2084730 published on 20.07.1997, MPK F16J15/34). This design is a multistage face seal comprising mounted in series work stages and end stage, each of which includes a rotor element located on the shaft and a spring-assisted axially movable stator element contacting it, sealed relatively to the casing with an O-ring, at the same time the cavities of high and low pressure of work stages are connected in series with restricted openings in the stator casing. In the casing the step-like cylindrical borings are made in parallel to the shaft axis, communicating over the smaller diameter with high-pressure cavity, and over the larger one - with low-pressure cavity into which axially movable step-like cylindrical pistons are mounted, sealed in borings over larger and smaller diameters with the possibility of interaction of the smaller diameter piston end with a stator element. This design serves for forceful closing of each stage of the seal, if it is opened, by providing the unit with power step-like pistons in addition to the springs. The drawback of this design is presence of an additional mechanical assembly - the piston, which can affect performance of the product in case of its jamming, for example, in the lowest position. This can result in destruction of the seal friction pair. Also, in the mechanical seal design there is a design flaw associated with the piston operation. In connection with the fact that the piston is made step-like, when it operates, a cavity with a variable volume is formed between the end face restricted by the diameters of its larger and smaller cylinders, as well as reciprocal face surface in the body. Due to the complete tightness of the cavity, there will be created within it a vacuum or compression of the medium enclosed in the cavity. This effect will disturb free movement of the piston and, as a consequence, its correct operation.

Object-matter of the patent:

- increase in reliability of the face seal due to reduction of the number of slide assemblies;
- increase in workability due to simplification of the assembly and reduction of number of parts in the product.

In particular, the following technical results can be obtained, if the invention is implemented:

- decrease in time expenditures for maintenance of the face seal;

- decrease in metal consumption due to reduction of the number of parts.

As implementing of object to achieve the technical result, a face seal design is proposed, which differs from the prototype as follows.

Multistage face seal comprising mounted in series work stages and end stage, each of which includes a rotor element located on the shaft and a spring-assisted axially movable stator element contacting it, sealed relatively to the casing with an O-ring, at the same time the cavities of high and low pressure of work stages are connected in series with restricted openings made in the stator element. The casing, in turn, comprises an external cylinder, in which the step-like ring and thrust rings are successively mounted - by one per each step. Thrust ring serves to lock spring between it and the stator element. Stator element and step-like ring of the casing are designed so that the stator element fulfills functions of the axially movable step-like piston sealed with rubber seals, at the same time a portion of the piston with smaller diameter is located in the high pressure region - before seal, and the second portion with larger outer diameter - on the side of lower pressure or after seal. In the area of transition of a smaller cylinder to a larger one a lowering is performed on the stator element. In turn, in the step-like ring reciprocal to the stator element, in the area of transition of cylinder diameters reciprocal to the stator element piston a through hole is made, so that at any position of the stator element not to extend beyond the lowering boundaries on it. This hole serves for compensation for the vacuum-compression in the formed cavity volume, when the stator element moves. Hole seal in the casing is implemented between the outer cylinder and the step-like ring by two rubber rings, between which it is located.

The working function of the seal is as follows. At normal operation of the face seal unit, a part of the working pressure is activated at each working stage of the seal using restricted openings, depending on the throughput capacity of the restricted opening. As a result, the stator element piston is affected by the force $F_1 = P_1 \times \pi \frac{D_1{}^2 - D_0{}^2}{4}$ from the side before seal, where $D_1$ is the smaller diameter of the stator element piston, $D_0$ - the internal diameter of the stator element, $P_1$ is pressure before the seal, the force $F_2 = P_2 \times \pi \frac{D_2{}^2 - D_0{}^2}{4}$ acts on the stator element piston from side after the seal, where $D_2$ is the larger diameter of stator element piston, $P_2$ is pressure after seal equal to $kP_1$, where k ($0 < k < 1$) is coefficient of pressure drop due to the restricted opening in the stator element. Forces $F_1$ and $F_2$ should be equal, so that the stator element in the operating position is affected by the spring force only $D_2 = \sqrt{\frac{D_1^2 - D_0^2(1-k)}{k}}$. If the seal is opened, pressure $P_2$ after the seal is equalized with pressure $P_1$

before the seal, it causes the situation that the force $F_2'$ = $F_1 \times \frac{D_2^2 - D_0^2}{D_1^2 - D_0^2}$ starts to act on the stator element piston surface after the seal more than before the seal, which causes it to move towards the gap closing direction. In order to compensate for changes in volume in the piston chamber during its movements, the area formed by the lowering on stator element, the counterpart of the step-like ring and the through hole is connected with the expansion tank.

The invention is explained in the drawing, which demonstrates a general view (axial section) of the face seal.

Multistage face seal comprises the casing 10 made in the form of outer cylinder, which accommodates step-like rings 11 and thrust rings 12 mounted in series - by one per each stage, as well as rotor elements 3 located on the shaft with contact surfaces 1 and spring-assisted axially movable stator elements 4 with contact surfaces 2 contacting with them.

Springs 13 are mounted between the thrust rings 12 and movable stator elements 4. They provide pressing force between the contact surfaces 1 and 2.

High pressure cavities 7 formed by the step-like rings 11, the stator elements 4 and the rotor elements 3 are connected with the low pressure cavities 8 formed between the thrust rings 12, the step-like rings 11, the stator elements 4 and the rotor elements 3, restricted openings 9 made in the stator elements 4.

The cavities of high and low pressure are separated by rubber rings 6.

Stator element 4 and step-like ring 11 are designed so that the stator element fulfills functions of the axially movable step-like piston, at the same time a portion of the piston with smaller diameter is located in the high pressure region - before seal, and the second portion with larger outer diameter - on the side of lower pressure or after seal. In the area of transition of a smaller cylinder to a larger one a lowering 14 is performed on the stator element 4. In turn, in the step-like ring 11 reciprocal to the stator element 4, in the area of transition of cylinder diameters a through hole 15 is made, so that at any position of the stator element not to extend beyond the lowering boundaries on it. This opening serves to compensate for the vacuum-compression in the volume between the step-like ring 11 and the stator element 4 restricted by the rubber rings 6 of the cavity formed when the stator element 4 moves.

The seal of this volume between the outer cylinder 10 and the step-like ring 11 is made with two rubber rings 5.

The working function of the seal is as follows. At normal operation of the face seal unit, a part of the working pressure is activated at each working stage of the seal using restricted openings 9, depending on the throughput capacity of the restricted opening. As a result, the stator element 4 piston is affected by the force

$F_1 = P_1 \times \pi \frac{D_1^2 - D_0^2}{4}$ from the side of high pressure cavity 7, where $D_1$ is the smaller diameter of the stator element piston, $D_0$ - the internal diameter of the stator element, $P_1$ is pressure from the side of high pressure cavity. From the low pressure cavity 8 side, the force

$F_2 = P_2 \times \pi \frac{D_2^2 - D_0^2}{4}$ acts on the stator element piston, where $D_2$ is the larger diameter of stator element piston, $P_2$ is pressure from the side of low pressure cavity equal to $kP_1$, where k $(0 < k < 1)$ is coefficient of pressure drop due to the restricted opening in the stator element. Forces $F_4$ and $F_{13}$ should be equal, so that the stator element 4 in the operating position is affected by the spring force 13 only $D_2 = \sqrt{\frac{D_1^2 - D_0^2(1-k)}{k}}$. If the seal is opened, pressure in the cavities is equalized, it causes the situation that the force $F_2' = F_1 \times \frac{D_2^2 - D_0^2}{D_1^2 - D_0^2}$ starts to act on the stator element piston surface, which causes it to move towards the gap closing direction.

In order to compensate for pressure changes in volume formed between the step-like ring 11, the stator element 4 and restricted by the rubber rings 6, formed during movements of the stator element 4, it is connected with the expansion tank beyond the face seal using the through hole 15.

## Claims

1. Face seal comprising mounted in series work stages, each of which includes a rotor element located on the shaft and a spring-assisted axially movable stator element contacting it, sealed relatively to the casing with an O-ring, at the same time the cavities of high and low pressure of work stages are connected in series with restricted openings made in the stator element, **characterized in that** the casing comprises outer cylinder, which accommodates step-like ring and thrust ring mounted in series - by one per each stage, wherein the step-like ring is sealed relatively to the cylinder and is reciprocal to the stator element, and the thrust ring acts as the spring lock between it and the stator element, restricted openings are made in stator element, which is designed so that to fulfill functions of the axially movable step-like piston sealed relatively to the step-like ring of the casing, at the same time a portion of the piston with smaller diameter is located in the high pressure region - before the seal, and the second portion with larger outer diameter - on the side of lower pressure or after seal, also in the casing outer cylinder and the step-like ring, in the region of transitions of the cylinder diameters reciprocal to the stator element pistons a through hole is made, which connects the formed cavity between casing and stator element with the expansion tank.

2. The face seal according to claim 1, **characterized in that** the outer diameters of the stator element piston stages are made with the ratio $D_2 = \sqrt{\dfrac{D_1^2 - D_0^2(1-k)}{k}}$, where $D_2$ is the diameter of the larger piston cylinder, $D_1$ is the diameter of the smaller piston cylinder, $D_0$ is the internal diameter of the stator element; k is the coefficient of pressure drop due to the restricted opening in the stator element.

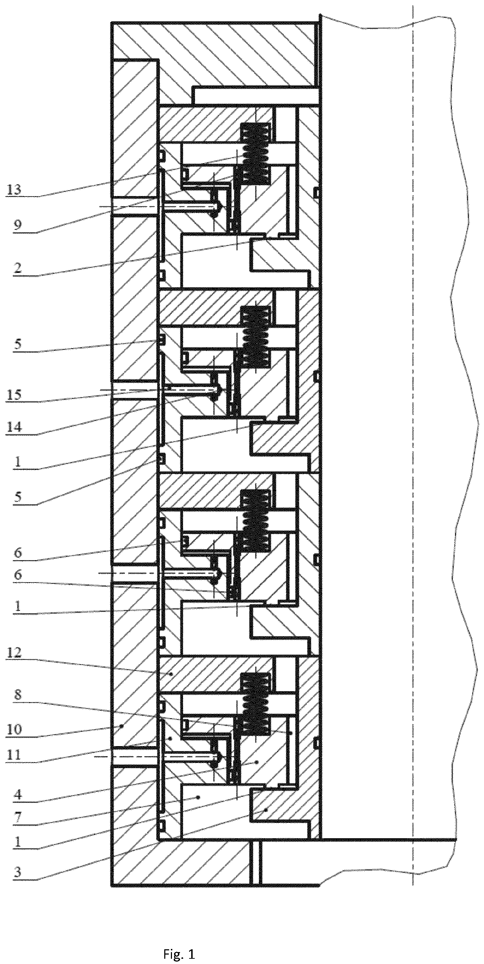

Fig. 1

# EP 3 473 897 A1

## INTERNATIONAL SEARCH REPORT

| | International application No. |
|---|---|
| | PCT/RU 2016/000373 |

**A. CLASSIFICATION OF SUBJECT MATTER**

F16J 15/34 (2006.01)    F04D 291108 (2006.01)

According to International Patent Classification (IPC) or to both national classification and IPC

**B. FIELDS SEARCHED**

Minimum documentation searched (classification system followed by classification symbols)

F16J 15/34 , 15/16, F04D 29/08, 29//10

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| A, D | RU 2084730 C1 (TSENTRALNOE KONSTRUKTORSKOE BIURO MASHINOSTROENIIA) 20.07.1997 | 1-2 |
| A | SU 1603115 A1 (SELIKHOV V.P. et al.) 30.10.1990 | 1-2 |
| A | SU 1556216 A2 (MEDVEDEV L.F.) 23.06.1993 | 1-2 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 March 2017 (14.03.2017) | 16 March 2017 (16.03.2017) |

| Name and mailing address of the ISA/ | Authorized officer |
|---|---|
| | |
| Facsimile No. | Telephone No. |

Form PCT/ISA/210 (second sheet) (July 1998)

## REFERENCES CITED IN THE DESCRIPTION

**Patent documents cited in the description**

- WO 2084730 A